# EUROPEAN PATENT APPLICATION

(11) **EP 1 527 924 A2**
(43) Date of publication of application: **04.05.2005**
(21) Application number: 04024470.9
(22) Date of filing: 14.10.2004
(51) Int. Cl.: B60J 5/04

(54) **Door frame**

(30) Priority: 30.10.2003 JP 2003370794; 30.10.2003 JP 2003370795
(71) Applicant: Aisin Seiki Kabushiki Kaisha, Kariya-shi, Aichi-ken 448-8650 (JP)
(72) Inventor: Masunaga, Satoshi Intellectual Property Dept., Kariya-shi Aichi-ken 448-8650 (JP); Yamasaki, Hiroaki Intellectual Property Dept., Kariya-shi Aichi-ken 448-8650 (JP)
(74) Representative: Balsters, Robert

(57) **Abstract**

A door frame (1) for a vehicle includes a lower frame (3) for guiding an up/down movement of a window glass (15), a main frame (4) connected to the lower frame for determining a top dead center of the window glass, and a bracket (5) for attaching a door mirror secured to the lower frame and the main frame. The bracket has a bottom portion (7, 5a) and a pair of opposing side wall portions (6, 5d) extended from both sides of the bottom portion, and each has a thickness thicker than that of the bottom portion.

## Description

### FIELD OF THE INVENTION

The present invention generally relates to a door frame. More particularly, the present invention relates to a door frame having a bracket for attaching a door mirror for a vehicle.

### BACKGROUND

A door frame includes a center pillar for guiding an up/down movement of a window glass and for making a vehicle to be locked/unlocked condition, a lower frame provided apart from the center pillar, the lower frame for guiding the up/down movement of the window glass, a main frame for connecting the lower frame to the center pillar and for determining a top dead center of the window glass, and a bracket for attaching a door mirror, the bracket provided between a front end portion of the main frame and the lower frame and secured to both main and lower frames.

The bracket has an approximately U-shape cross-section. Opposing side wall portions of the bracket are welded together with the lower frame and the main frame respectively. Thus, the bracket is secured to the lower frame and the main frame. Cross-sectional shape, thickness, and material of the center pillar, the lower frame, the main frame, and the bracket are considered for ensuring rigidity of a door. The conventional door frame are described in JP1997-071184A2, JP-1999-129758A2, JP1999-129761, JP1999-342745, JP2001-341529A2 and JP6-320955A2.

When the vehicle is moving at high speed, a negative pressure is generated by airflow along the door frame and a door panel. The negative pressure induces force pulling the door including the door frame toward the exterior of the vehicle. Then, for securely sealing the vehicle interior against force pulling the door, the rigidity of the door is required.

Rigidity of the door can be improved by increasing rigidity of the door frame. Conventionally, for improving rigidity of the door frame, the door has been made of steel having high strength. Further, the thickness of the components has been increased. In addition, the number of welded positions has been increased. However, these methods for increasing rigidity of the door frame causes increase of weight, cost, and man-hour.

A need thus exists for a door frame having increased rigidity without increase of weight, cost, and man-hour.

### SUMMARY OF THE INVENTION

According to an aspect of the present invention, a door frame (1) for a vehicle includes a lower frame (3) for guiding an up/down movement of a window glass (15), a main frame (4) connected to the lower frame for determining a top dead center of the window glass, and a bracket (5) for attaching a door mirror secured to the lower frame and the main frame. The bracket has a bottom portion (7, 5a) and a pair of opposing side wall portions (6, 5d) extended from both sides of the bottom portion, and each has a thickness thicker than that of the bottom portion.

An inventor of the present invention found that an improvement of rigidity of the bracket could substantially contribute to increase rigidity of the door frame and a door. According to further of the present invention, rigidity of the door frame and the door may be increased by the pair of thicker side wall portions extending to a vehicle interior provided apart each other than the bottom portion of the bracket without weight increase of the door frame and the door.

According to further aspect of the present invention, the bracket can be formed in conventional way without increasing man-hour and an additional facility. If rigidity of the door frame is the same as before, weight of the door frame can be more lighter than the conventional one. If weight of the door frame is the same as before, the door frame can be more rigid than the conventional one. Therefore, an airtightness of the vehicle interior is not degraded even when the vehicle is moving at high speed. Rigidity of the door frame is further increased by drawing the bracket deeper and by making the opposing side wall portions of the bracket longer to overcome force breaking the door frame.

According to further aspect of the present invention, the door frame made of light alloy can be made as rigid as the door frame made of steel. Further, the door frame according to the second embodiment of the present invention can be made much lighter than the door frame made of steel. The door frame becomes more rigid and lighter than a conventional door frame. Since a product made by die casting for the door frame is comparatively smaller, the door frame can be made at lower cost than the conventional door frame made of light alloy. The components such as the main frame, the lower frame, and an outer frame of a center pillar can be made as common components. Adjustment of a leaning angle of the door does not require an adjustment of an entire door when build. Leaning angle can be adjusted by only an adjustment of the door frame. A manufacturing facility can be common to that of the conventional door frame made of steel because the structure of the door frame is similar to the door frame made of steel.

### BRIEF DESCRIPTION OF THE DRAWINGS

The foregoing and additional features and characteristics of the present invention will become more apparent from the following detailed description considered with reference to the accompanying drawings, wherein:
Fig. 1 shows a front view of a door frame.
Fig. 2 shows a cross-sectional view taken on arrow II-II of Fig. 1.
Fig. 3 shows a cross-sectional view showing the other example of a bracket.
Fig. 4 shows a front view showing a structure of a door frame.
Fig. 5 shows a front view of a bracket according to the second embodiment of the present invention.
Fig. 6 shows a cross-sectional view taken on arrow VI-VI in Fig. 5.
Fig. 7 shows a cross-sectional view taken on arrow VII-VII in Fig. 5.
Fig. 8 shows a cross-sectional view taken on arrow VIII-VIII in Fig. 4.
Fig. 9 shows a front view showing the other example of an inner frame of a center pillar.
Fig. 10 shows a cross-sectional view taken on arrow X-X in Fig. 9.

### DETAILED DESCRIPTION

A first embodiment of the present invention will be explained with reference to the illustrations of the drawing figures as follows.

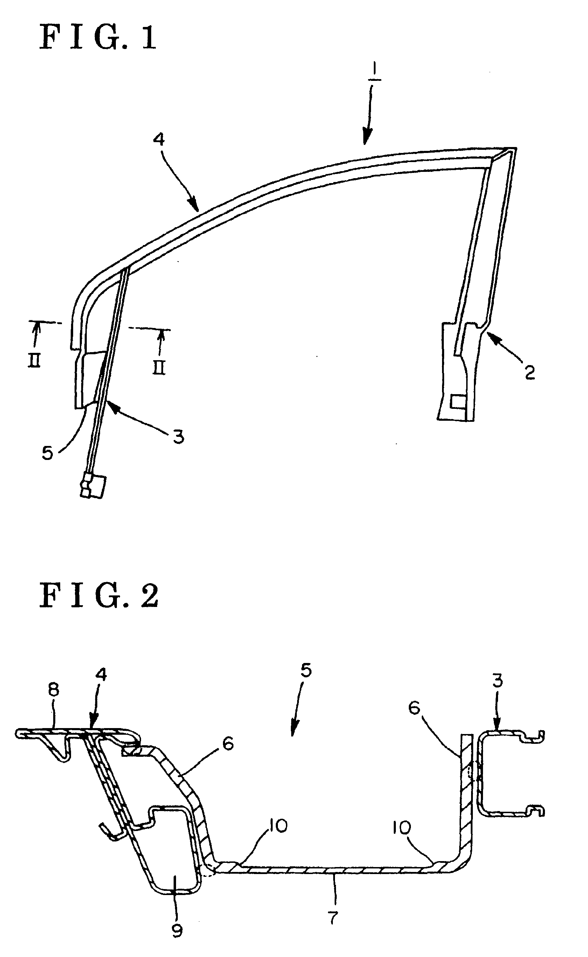

As shown in Fig. 1, a door frame 1 includes a center pillar 2 for guiding an up/down movement of a window glass and for making a vehicle to be locked/unlocked condition, a lower frame 3 provided apart from the center pillar 2, the lower frame 3 for guiding the up/down movement of the window glass, a main frame 4 for connecting the lower frame 3 to the center pillar 2 and for determining a top dead center of the window glass, and a bracket 5 for attaching a door mirror provided between a front end portion of the main frame 4 and the lower frame 3 and secured to both main and lower frames 4, 3.

As shown in Fig. 2, the bracket 5 has an approximately U-shape cross-section. The bracket 5 is welded together with the lower frame 3 and the main frame 4. The bracket 5 includes a pair of opposing side wall portions 6 and a bottom portion 7. The bottom portion 7 of the bracket 5 connects the pair of side wall portions 6 of the bracket 5. One of the pair of side wall portions 6 of the bracket 5 is extended close to a decorative surface 8 provided at an outer side of the main frame 4 and between the decorative surface 8 and a hollow portion 9 of the main frame 4. Further, the one of the pair of side wall portions 6 is extended close to the same plane as an inner side wall portion of the hollow portion 9 of the main frame 4. The other of the pair of side wall portions 6 is extended along a bottom wall portion of the lower frame 3, and toward the vehicle interior.

The pair of opposing side wall portions 6 of the bracket 5 is thicker than the bottom portion 7 of the bracket 5 to increase rigidity without increasing weight thereof. Inventor of the present invention found that the improvement of rigidity of the bracket could substantially contribute to increase rigidity of the door frame. In other words, rigidity increase of the bracket 5 increases rigidity of the door frame 1. Accordingly, the rigidity of the door frame 1 can be increased without increasing the weight thereof.

The bracket 5 having the U-shape cross-section is formed by a deep drawing from a plate having at least a thicker portions to be the pair of side wall portions 6 opposing to the main frame 4 and the lower frame 3 and having thickness thicker than the bottom portion 7 and a portion to be the bottom portion 7.

For forming the bracket 5, a tailored blank made of steel, a plate having different thickness made by forging, a plate made by laser welding from a plural plates having different thickness each other can be utilized. Needless to say, the thickness of the plate can be changed to have the pair of the thicker side wall portions 6 than the bottom portion 7 by deep drawing process of the bracket 5.

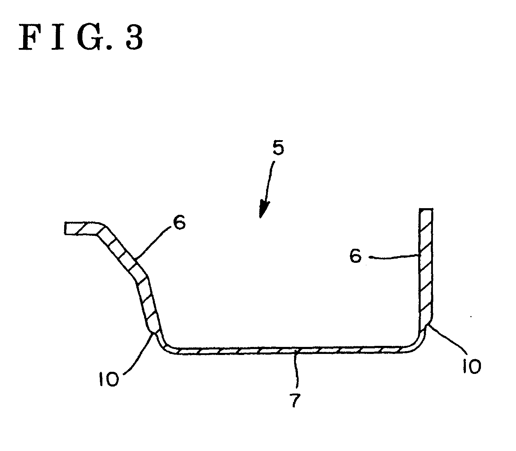

As shown in Fig. 2, it is preferable that the pair of thicker side wall portions 6 are extended to the both sides of the bottom portion 7 of the bracket 5. It is also preferable that smooth stepped portions 10 are provided at the both sides of the bottom portion 7. In different way, as shown in Fig. 3, the stepped portions 10 can be provided at the vehicle interior side of the pair of side wall portions 6 close to the bottom portion 7 of the bracket 5.

The bracket can be easily formed without a specially designed facility. The bracket mentioned above obtains increased rigidity, which makes the door frame and the door more rigid without weight increase of the bracket.

A second embodiment of the present invention will be explained with reference to the illustrations of the drawing figures as follows.

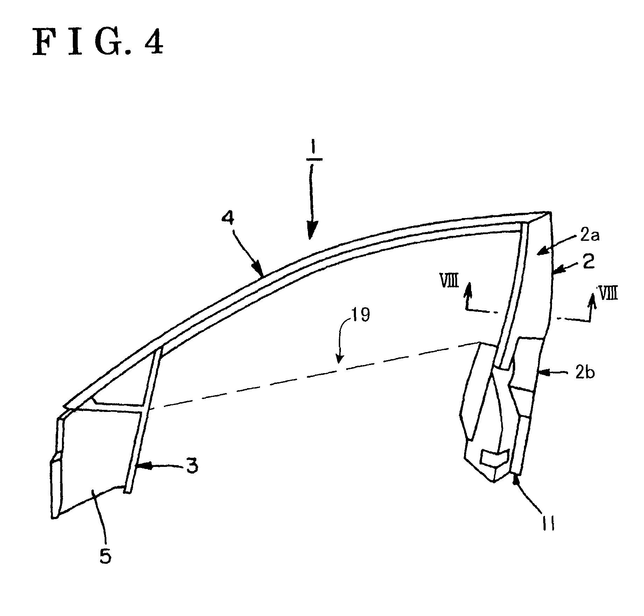

As shown in Fig. 4, a door frame 1 includes a center pillar 2 and a lower frame 3 for guiding an open/close movement of a window glass, a main frame 4 for supporting the center pillar 2 and the lower frame 3 at apart position each other and for determining a top dead center of the window glass, and a bracket 5 secured to the main frame 4 and the lower frame 3. Preferably, the main frame 4 is made of, but not limited to, light alloy by extrusion. The main frame 4 may be made of steel, or the like.

To obtain the door frame 1 having increased rigidity without increase of weight, cost, and man-hour, the bracket 5 is made of light alloy by casting and includes ribs projecting in a vehicle width direction side by side. Light alloy includes aluminum alloy, magnesium alloy, and titanium series alloy, or the like.

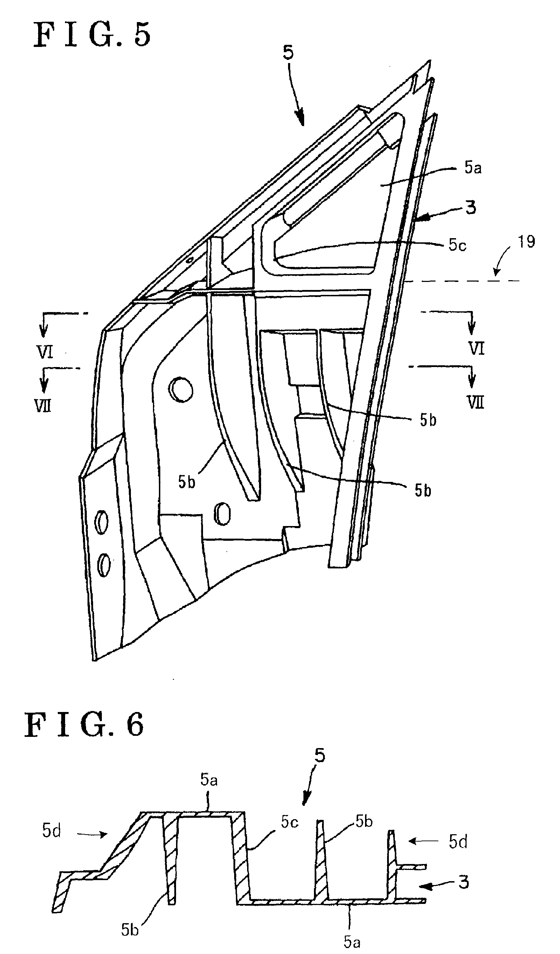

Fig. 5 shows an example of the bracket 5 made of aluminum alloy by die casting. The bracket 5 is made by casting as a unit with the lower frame 3. A main body 5a of the bracket 5 is made flat. Ribs 5b projecting in vehicle width direction formed as a unit with the main body 5a are extended in vertical direction.

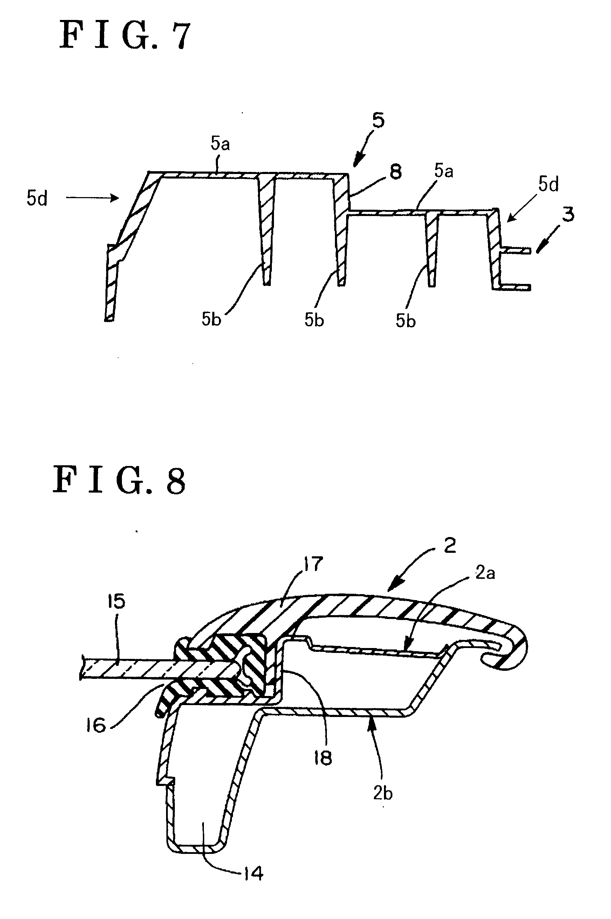

As shown in Fig. 5, the main body 5a of the bracket 5 is extended downward in vertical direction over a belt line 19. The number, height, and thickness of the ribs 5b are determined with consideration about rigidity to be required. As shown in Figs. 6-7, a stepped portion 5c is provided at the center of the main body 5a. As shown in Fig. 5, the stepped portion 5c connects the lower frame 3 to the main body 5a to increase strength of a connection therebetween, which increases rigidity of the vehicle in fore-and-aft direction. A part of the stepped portion 5c is extended to an upper end of the bracket 5 to increase strength of a connection with the main frame 4.

The center pillar 2 made of light alloy includes an outer frame 2a and an inner frame 2b. The outer frame 2a is preferably made of aluminum alloy by extrusion. The inner frame 2b is preferably made of aluminum alloy by die casting. The inner frame 2b is formed as a unit with a lock reinforcement 11. As shown in Fig. 4, a width of the center pillar 2 becomes wider from the upper end of the center pillar 2 to the belt line 19. The widened portion of the outer frame 2a can be formed by trimming in a pressing process.

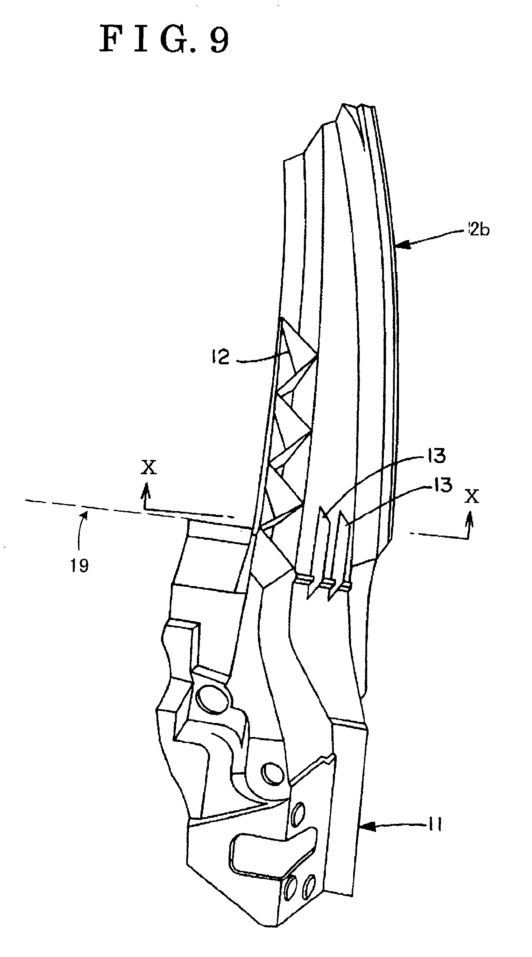

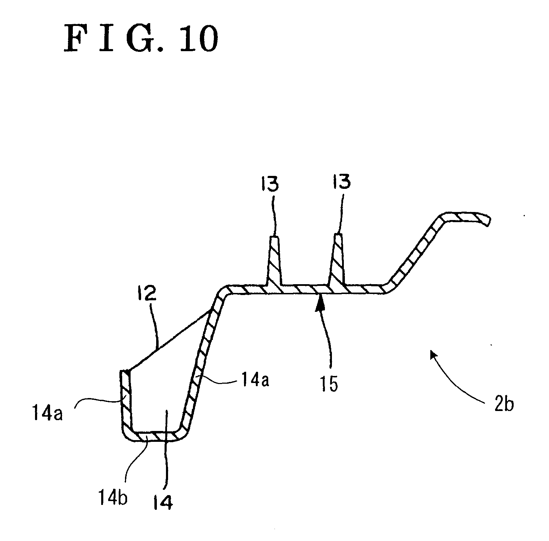

As shown in Fig. 9 and Fig. 10, the inner frame 2b made by die casting has first ribs 12 and second ribs 13. The first ribs 12 are connected to an opposing side wall portions 14a and a bottom wall portion 14b of a hollow portion 14 of the inner frame 2b. The hollow portion 14 has a U-shape cross-section. As shown in Fig. 9, the first ribs 12 are continuously provided in the hollow portion 14 in zigzag configuration. Two second ribs 13 are provided at the inner frame 2b side by side and extended toward the outer frame 2a in vertical direction. The number, position of the second ribs 13 can be properly determined by considering about rigidity to be required for the center pillar 2. In an example shown in Fig. 9, all of the first and second ribs 12, 13 are provided around the belt line 19. Short ribs can be provided at also an upper portion of the inner frame 2b. It is preferable that base portions of the first and second ribs 12, 13 are thick and become thinner toward the end.

By forming the inner frame 2b as a unit with the lock reinforcement 11, and by enlarging size of the inner frame 2b around the belt line 19 in the vehicle width direction, rigidity of the center pillar 2 is increased and light weighted, and highly rigid door frame 1 can be provided. In other words, the cross-section of the center pillar 2 becomes to be maximum around the belt line 19. Further, ribs can be provided at the lock reinforcement 11 as required bases.

As shown in Fig. 8, the outer frame 2a of the center pillar 2 and a decorative member 17 determine a position of a groove 16 for guiding the window glass 15. The decorative member 17 is supported by and between a side end of the outer frame 2a and a stepped portion 18 of the main body 5a.

An inventor of the present invention found that the improvement of rigidity of the mirror bracket could substantially contribute to increase rigidity of the door frame and the door. According to the first embodiment of the present invention, the rigidity of the door frame and the door may be increased by the pair of thicker side wall portions extending to the vehicle interior provided apart each other than the bottom portion of the bracket without weight increase of the door frame and the door.

According to the first embodiment of the present invention, the bracket can be formed in conventional way without increasing man-hour and an additional facility. If rigidity of the door frame is the same as before, weight of the door frame can be more lighter than the conventional one. If weight of the door frame is the same as before, the door frame can be more rigid than the conventional one. Therefore, an airtightness of the vehicle interior is not degraded even when the vehicle is moving at high speed. Rigidity of the door frame is further increased by drawing the bracket deeper and by making the opposing side wall portions of the bracket longer to overcome force breaking the door frame.

According to the second embodiment of the present invention, the door frame made of light alloy can be made as rigid as the door frame made of steel. Further, the door frame according to the second embodiment of the present invention can be made much lighter than the door frame made of steel. The door frame becomes more rigid and lighter than a conventional door frame. Since a product made by die casting for the door frame is comparatively smaller, the door frame can be made at lower cost than the conventional door frame made of light alloy. The components such as the main frame, the lower frame, and the outer frame of the center pillar can be made as common components. Adjustment of a leaning angle of the door does not require an adjustment of an entire door when build. Leaning angle can be adjusted by only an adjustment of the door frame. A manufacturing facility can be common to that of the conventional door frame made of steel because the structure of the door frame is similar to the door frame made of steel.

## Claims

1. A door frame (1) for a vehicle comprising:
a lower frame (3) for guiding an up/down movement of a window glass (15);
a main frame (4) connected to the lower frame for determining a top dead center of the window glass; and
a bracket (5) for attaching a door mirror secured to the lower frame and the main frame
**characterized in that**
the bracket has a bottom portion (7, 5a) and a pair of opposing side wall portions (6, 5d) extended from both sides of the bottom portion, and each has a thickness thicker than that of the bottom portion.

2. The door frame according to Claim 1, wherein
the bottom portion of the bracket is provided along the same plane as an inner side wall portion of the main frame relative to the vehicle, and wherein an end portion of one of the pair of opposing side wall portions is extended close to a decorative surface (8) provided at an outer side of the main frame.

3. The door frame according to Claim 2, wherein
the pair of the side wall portions of the bracket is welded together with the main frame and the lower frame respectively.

4. The door frame according to Claim 1, wherein
the bracket is made of light alloy by casting, and wherein the bracket includes a plurality of ribs (5b) projecting in a vehicle width direction.

5. The door frame according to Claim 1, further comprising:
a center pillar (2) for guiding the up/down movement of the window glass together with the lower frame; and including
an outer frame (2a) made of light alloy by extrusion and an inner frame (2b) made of light alloy by casting as a unit with a lock reinforcement (11).

6. The door frame according to any one of Claims 4-5, wherein
the main frame is made of light alloy by extrusion.

7. The door frame according to Claim 6, wherein
the lower frame is made of light alloy by extrusion.

8. The door frame according to Claim 6, wherein
the lower frame is formed as a unit with the bracket.

9. The door frame according to Claim 1, further comprising:
a center pillar (2) for guiding the up/down movement of the window glass together with the lower frame; wherein
the bracket is made of light alloy by casting and includes a plurality of ribs (5b) projecting in a vehicle width direction, the center pillar includes an outer frame (2a) made of light alloy by extrusion and an inner frame (2b) made of light alloy by casting as a unit with a lock reinforcement (11).

10. The door frame according to any one of Claims 5,9 wherein
the inner frame of the center pillar includes a hollow portion (14) having an approximately U-shape cross-section and a flat portion (15), the inner frame further includes a first rib (12) formed as a unit with opposing side wall portions (14a) and a bottom wall portion (14b) of the hollow portion of the inner frame and a second rib (13) projecting from the flat portion of the inner frame.

11. The door frame according to Claim 6, wherein
the inner frame of the center pillar includes a hollow portion (14) having an approximately U-shape cross-section and a flat portion (15), the inner frame further includes a first rib (12) formed as a unit with opposing side wall portions (14a) and a bottom wall portion (14b) of the hollow portion of the inner frame and a second rib (13) projecting from the flat portion of the inner frame.

12. The door frame according to Claim 10, wherein
the outer frame of the center pillar includes a stepped portion (18), and wherein a decorative member (17) secured to the outer frame and the stepped portion of the outer frame determines a position of a groove (16) for guiding the up/down movement of the window glass (15).
